# EUROPEAN PATENT APPLICATION

(11) **EP 2 978 092 A1**
(43) Date of publication of application: **27.01.2016**
(21) Application number: 14178374.6
(22) Date of filing: 24.07.2014
(51) Int. Cl.: H02H 7/10

(54) **Fault tolerant control of modular multilevel converters by reference modification**

(71) Applicant: Siemens Aktiengesellschaft, 80333 München (DE)
(72) Inventor: Das, Anandarup, 7041 Trondheim (NO); Mosgren, Idun Runde, 4817 HIS (NO); Norum, Lars, 7013 Trondheim (NO)

(57) **Abstract**

It is described a method for operating a voltage source converter comprising a modular multilevel converter topology with three electrical output lines (100, 200, 300), each assigned to a different electrical path (110, 210, 310), the method comprising: Identifying at least one sub module (400) of the modular multilevel converter topology as to be defective, wherein the at least one defective sub module (410) is assigned to a first electrical path (110); bypassing the at least one defective sub module (410); and adjusting at least one reference waveform for an electrical quantity of at least one of the three electrical paths (110, 210, 310), for compensating at least partially an influence of the at least one defective sub module (410) on an output signal provided by at least one of the three electrical output lines (100, 200, 300).

## Description

### Field of invention

The present invention relates to the field of power converters, more specifically to voltage source power converters.

### Art Background

Modular Multilevel Converter (MMC) topologies are often used as voltage converters for electrical machines. For example, if a motor of an electrical machine has to be driven by a DC voltage source or by an AC generator which may have another output voltage than the input voltage needed by the respective motor, a voltage converter may be used in order to supply the respective motor with the needed electrical energy. Such MMCs often use insulated-gate bipolar transistors (IGBT) for such a power conversion. As such power transistors may become defective from time to time, the power conversion may fail, if an IGBT may became defective in such an MMC topology, and thus the defective power converter may have to be replaced.

As electrical machines are often used in environments where a replacement of parts may be not easy performable, there may be a need for more fault-tolerant voltage converters.

### Summary of the Invention

This need may be met by the subject matter according to the independent claims. Advantageous embodiments of the present invention are described by the dependent claims.

According to a first aspect of the invention there is provided a method for operating a voltage source converter comprising a modular multilevel converter topology with three electrical output lines, each assigned to a different electrical path, the method comprising: Identifying at least one sub module of the modular multilevel converter topology as to be defective, wherein the at least one defective sub module is assigned to a first electrical path; bypassing the at least one defective sub module; and adjusting at least one reference waveform for an electrical quantity of at least one of the three electrical paths, for compensating at least partially an influence of the at least one defective sub module on an output signal provided by at least one of the three electrical output lines.

An electrical output line according to the invention may be an electrical line, which may be connected on one side of the line to the multilevel converter topology and on the other side of the line to a load, like for example an electrical machine.

An electrical path according to the invention may be a part of the modular multilevel converter (MMC) topology, which may be connected on one side of the path to an electrical output line and on the other side of the path to a power source.

A sub module according to the invention may be a part of the modular multilevel converter topology. A sub module may provide a part of the needed voltage drop for the electrical output line. Preferably, one sub module may provide an amount of needed voltage drop, corresponding to the needed voltage drop for the respective output line divided by the amount of operating sub modules in the respective path. A sub module may provide a part of the needed energy for the electrical output line. Preferably, one sub module may provide an amount of needed energy, corresponding to the needed energy for the respective output line divided by the amount of operating sub modules in the respective path. In this case, the respective sub module provides only a part the energy it may provide. More preferably, a sub module in full operation mode, may provide the complete amount of needed energy for the respective output line.

A defective sub module according to the invention may be a sub module, which may no longer be able to provide the energy it should contribute to the respective output line.

A bypassing of a sub module according to the invention may be an electrical component, useable to bridge the respective defective sub module, such that the current flow in the respective electrical path of the defective sub module may be maintained. This may be achieved by activation of a bypass-element or shortcut-circuit, which may be part of the respective defective sub module, and which may be deactivated as long as the respective sub module is in an error-free operating.

A reference waveform according to the invention may be a waveform needed as a reference signal, for creating a desired energy waveform at an electrical output line.

An electrical quantity according to the invention may be a current or a voltage, preferably as part of a sinusoidal electrical energy wave.

This aspect of the invention is based on the idea that by providing a method for bypassing a defective sub module and compensating an electrical quantity loss which may occur in the respective signal of the respective electrical output line, a fail-safe MMC may be provided, resulting in a fault-tolerant voltage converter.

According to a further embodiment of the invention the electrical quantity is a voltage.

This embodiment of the invention is based on the idea that by compensating the voltage loss which may occur in the respective signal of the respective electrical output line, a simple and reliable way of compensation of the electrical quantity loss may be provided.

According to a further embodiment of the invention the at least one reference waveform is adjusted in such a manner that all line-to-line voltages of the three electrical output lines are equalized.

Equalizing according to the invention may be aligning the voltage of one output line or path with the voltages of the remaining output lines or paths, such as to receive same voltage curves over the time.

This embodiment of the invention is based on the idea that by equalizing the voltage signals of all electrical output lines, the electrical machine which shall be driven will still be energized in a symmetrical manner and thus may have no dropouts.

According to a further embodiment of the invention adjusting at least one reference waveform comprises adjusting at least one voltage of at least one operating sub module in at least one electrical path.

If the MMC may provide a spare sub module, this spare sub module may be applied to the respective electrical path where the defective sub module is located. This may be achieved by a respective bypass circuit, in which the spare sub module may be applied to. With this, the spare sub module will be an operating sub module within the respective electrical path and thus the voltage drop over this sub module will be adjusted to be the same as the voltage drop of the defective sub module was before the sub module got defective.

This embodiment of the invention is based on the idea that by using at least one of the operating sub modules in the respective electrical path, the lost voltage drop from the defective sub module may be compensated directly in this electrical path.

According to a further embodiment of the invention adjusting the at least one voltage comprises adjusting the magnitude of the at least one voltage.

This embodiment of the invention is based on the idea that each sub module adds a certain amount of voltage drop to the respective electrical path. By adjusting the magnitude this lost certain amount is compensated, such that the energy output of the respective electrical output line may be compensated.

According to a further embodiment of the invention adjusting at least one reference waveform comprises adjusting the reference waveform assigned to the first electrical path.

This embodiment of the invention is based on the idea that by adjusting the reference waveform of the respective path of the defective sub module, a compensated waveform of the respective signal of the respective electrical output line may be provided.

According to a further embodiment of the invention adjusting the reference waveform comprises increasing the voltage of at least one operating sub module assigned to the first electrical path.

This embodiment of the invention is based on the idea that by using at least one of the operating sub modules in the first electrical path, the lost voltage drop from the defective sub module may be compensated directly in the first electrical path.

According to a further embodiment of the invention adjusting the reference waveform comprises increasing each voltage of each operating sub module assigned to the first electrical path by a same first amount.

This embodiment of the invention is based on the idea that by adjusting the voltage drop of all operating sub modules in the defective electrical path by a same amount, the electrical components of each sub module may all be stressed in a same way, and therefore the safety limit values of the respective electrical components in each operating sub module may not be excessed.

According to a further embodiment of the invention adjusting the reference waveform comprises taking energy from the reference waveform assigned to the second electrical path and from the reference waveform assigned to the third electrical path, and reconstructing the reference waveform assigned to the first electrical path with the taken energy.

This embodiment of the invention is based on the idea that by taking the needed compensation energy from the remaining accordingly operating electrical paths, and assigning this taken energy to the electrical path wherein the defective sub module is located, a way of balancing the line-to-line voltages of the electrical output lines is provided, without stressing any electrical components of the remaining operating sub modules in any electrical path of the MMC.

According to a further embodiment of the invention adjusting at least one reference waveform comprises adjusting the reference waveform assigned to the second electrical path, and adjusting the reference waveform assigned to the third electrical path.

This embodiment of the invention is based on the idea that by adjusting the reference waveform of the electrical paths which are not affected by a defective sub module, the electrical components of the remaining operating sub modules may be less stressed.

According to a further embodiment of the invention adjusting the reference waveform comprises increasing the voltage of at least one operating sub module assigned to the second path, and increasing the voltage of at least one operating sub module assigned to the third path.

This embodiment of the invention is based on the idea that by partitioning the needed compensation on two electrical paths, an alternative way may be provided, such as to less stress the electrical components of the remaining operating sub modules.

According to a further embodiment of the invention adjusting the reference waveform comprises increasing each voltage of each operating sub module assigned to the second path by a same second amount, and increasing each voltage of each operating sub module assigned to the third path by a same third amount.

This embodiment of the invention is based on the idea that by partitioning the needed compensation on all operating sub modules of the remaining two electrical paths, and stressing all operating sub modules of the respective electrical path in a same amount, the electrical components of each sub module may all be stressed in a same way, and therefore the safety limit values of the respective electrical components in each operating sub module may not be excessed.

According to a further embodiment of the invention the second amount equals to the third amount.

This embodiment of the invention is based on the idea that by partitioning the needed compensation on all operating sub modules of the remaining two electrical paths, and stressing all operating sub modules of both electrical paths in a same amount, the electrical components of each sub module may all be even less stressed in a same way, and therefore the safety limit values of the respective electrical components in each operating sub module may not be excessed.

According to a further aspect of the invention there is provided a voltage source converter device with a modular multilevel converter topology, the voltage source converter device comprising: three electrical output lines, one electrical path for each electrical output line, at least two sub modules for each electrical path, and a controller, for controlling the operation of the voltage source converter device. Therein, the controller is adapted for executing any of the methods according to the invention.

This aspect of the invention is based on the idea that by providing a voltage source converter device with a modular multilevel converter topology able to bypass a defective sub module and to compensate an electrical quantity loss which may occur in the respective signal of the respective electrical output line, a fail-safe MMC may be provided, resulting in a fault-tolerant voltage converter device.

According to a further embodiment of the invention controlling of the operation of the voltage source converter device comprises continuing an operation of the voltage source converter device after execution of the respective method.

This embodiment of the invention is based on the idea that by stopping operation of the voltage source converter device for executing any of the compensation methods according to the invention and continuing operation after the compensation method is finished, the electrical components of the voltage source converter as well as the to be driven electrical machine may be protected against damage.

According to a further embodiment of the invention controlling of the operation of the voltage source converter device comprises providing a transient period starting with an end of the execution of the respective method and ending with the continuing of the operation.

This embodiment of the invention is based on the idea that such a transient period may be used in order to allow for a transient oscillation of the electrical circuit after readjusting the electrical circuit, such as to ensure, that other components of the voltage source converter device are not damaged during the transient effect phase.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematically drawing of a voltage source converter device with a Modular Multilevel Converter (MMC) topology, according to an exemplary embodiment of the invention.
Figure 2 shows a schematically drawing of the phase voltages and the line-to-line voltages of a voltage source converter device in a normal operation state, according to an exemplary embodiment of the invention.
Figure 3 shows a schematically drawing of the phase voltages and the line-to-line voltages of a voltage source converter device, if a sub module in the electrical path A fails, in an uncompensated defective operation state.
Figure 4 shows a schematically drawing of the phase voltages and the line-to-line voltages of a voltage source converter device, if a sub module in the electrical path A fails, in a compensated operation state, according to an exemplary embodiment of the invention.
Figure 5 shows a schematically drawing of the phase voltages and the line-to-line voltages of a voltage source converter device, if a sub module in the electrical path A fails, in a compensated operation state, according to an further exemplary embodiment of the invention.
Figure 6 shows a schematically drawing of the phase voltages of a voltage source converter device, if a sub module in the electrical path B fails, in a compensated operation state, according to an further exemplary embodiment of the invention.
Figure 7 shows a schematically drawing of a sub module of a voltage source converter device, according to an exemplary embodiment of the invention.
Figure 8 shows a schematically drawing of a compensation method for a voltage source converter device, according to an exemplary embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

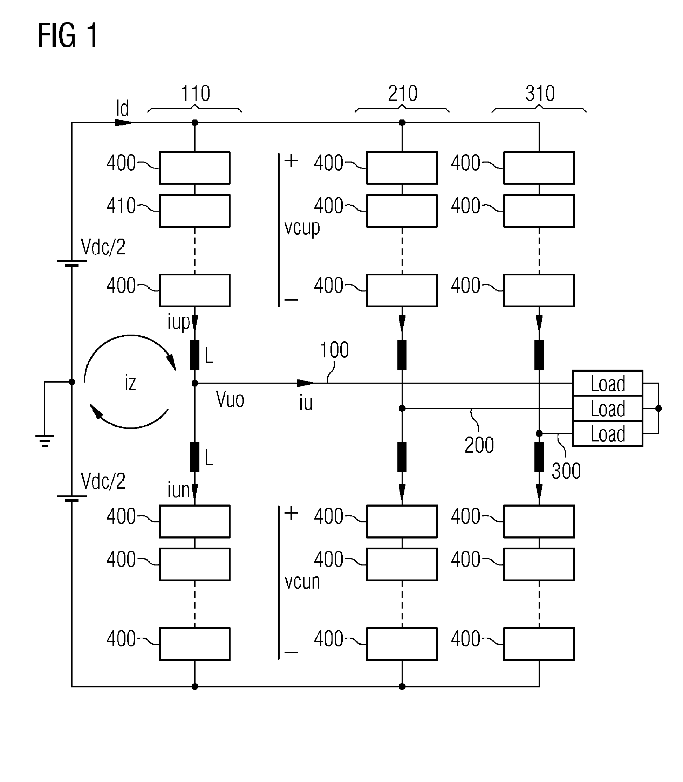

Figure 1 shows a schematically drawing of a voltage source converter device with a Modular Multilevel Converter (MMC) topology, according to an exemplary embodiment of the invention.

In Figure 1 is shown a voltage source converter device with a modular multilevel converter topology, the voltage source converter device comprising: three electrical output lines 100, 200, 300, one electrical path 110, 210, 310 for each electrical output line 100, 200, 300, at least two sub modules 400 for each electrical path 110, 210, 310 and a controller, for controlling the operation of the voltage source converter device. Therein, the controller is adapted for executing any of the methods according to the invention.

The voltage source converter device may control the operation of the voltage source converter device in such a manner, that an operation of the voltage source converter device is stopped, if a defective sub module is located and is continued after execution of the respective compensation method. The controlling of the operation of the voltage source converter device may moreover comprise providing a transient period starting with an end of the execution of the respective method and ending with the continuing of the operation. This may be useful for protecting electrical components of the voltage source converter device as well as a load connected to the voltage source converter device, such as an electrical machine, during an transient effect time after finishing a respective compensation method.

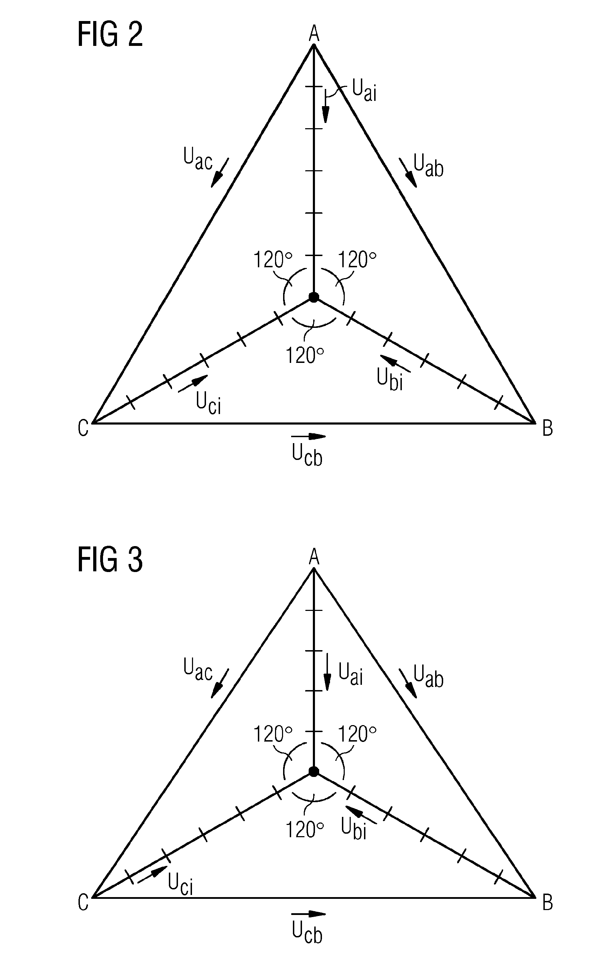

Figure 2 shows a schematically drawing of the phase voltages and the line-to-line voltages of a voltage source converter device in a normal operation state, according to an exemplary embodiment of the invention.

In Figure 2 six sub modules 400 (not shown in Figure 2) are used for each electrical path A, B and C, wherein each sub module 400 contributes 1/6 of the total voltage drop of each respective electrical path A, B and C. These phase voltages Ua, Ub and Uc are all the same Ua = Ub = Uc. Therefore the voltage of each operating sub module 400 in each electrical path A, B and C are Uai = Ubi = Uci = 1/6 Ua. The line-to-line voltages Uab, Uac and Ubc have all the same magnitude and are 120° phase different to each other.

Figure 3 shows a schematically drawing of the phase voltages and the line-to-line voltages of a voltage source converter device, if a sub module in the electrical path A fails, in an uncompensated defective operation state.

Figure 3 refers to Figure 2. The difference is that in Figure 3 one sub module 410 (not shown in Figure 3) is defective, and therefore Figure 3 shows such an occurring uncompensated - defective and unwanted - operation state.

In Figure 3 in the electrical path A only five sub modules 400 (not shown in Figure 3) are left in operation state. Therefore, each of the operating sub modules 400 still contributes 1/6 of the total voltage drop of electrical path A. Therefore, the phase voltages Ua, Ub and Uc are not all the same anymore. It is Ua < Ub = Uc. And therefore, the line-to-line voltages Uab, Uac and Ubc are not balanced anymore, as Uab = Uac < Ucb. The phase different is still a 120° phase different to each other.

But as the line-to-line voltages Uab, Uac and Ubc are now unbalanced, a connected electrical machine as a load may not work in a proper way anymore.

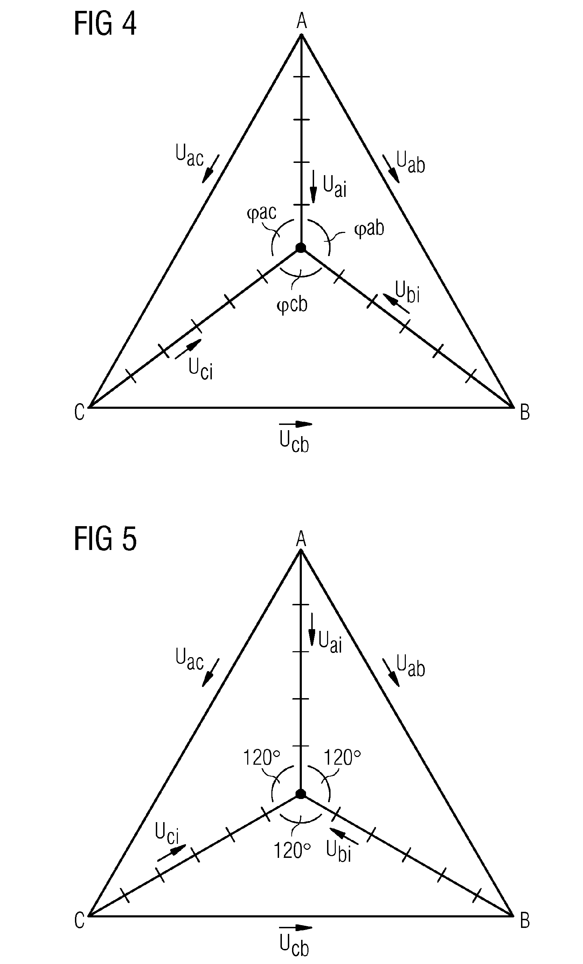

Figure 4 shows a schematically drawing of the phase voltages and the line-to-line voltages of a voltage source converter device, if a sub module in the electrical path A fails, in a compensated operation state, according to an exemplary embodiment of the invention.

Figure 4 refers to Figure 3. The difference is that Figure 4 shows a first compensation embodiment according to the invention, in order to receive again a wanted, faultless operation state.

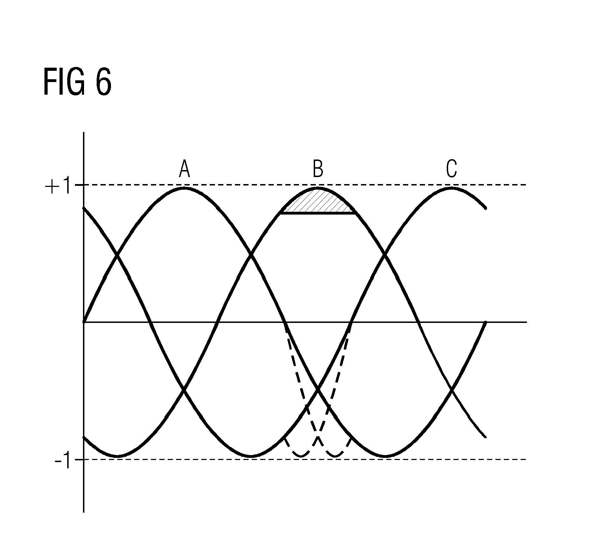

In Figure 4 in the electrical paths B and C the each operating six sub modules 400 (not shown in Figure 6) now each contributes a higher voltage drop Ubi, Uci to its respective electrical path B, C, such as to compensate the voltage drop loss occurring from the defective sub module, and thus increasing the line-too-line voltages Uac and Uab, such as to balance the magnitudes of all three line-to-line voltages Uab, Uac and Ucb again. Therein, adjusting 30 at least one reference waveform comprises adjusting the reference waveform assigned to the second electrical path 210, A, and adjusting the reference waveform assigned to the third electrical path 310, C. Therefore, the phase voltages are Ua < Ub = Uc. And the line-to-line voltages are Uab = Uac = Ucb. The phase differences between the line-to-line voltages now change, and are ϕab =. Φac > 120°, and ϕab < 120°.

Figure 5 shows a schematically drawing of the phase voltages and the line-to-line voltages of a voltage source converter device, if a sub module in the electrical path A fails, in a compensated operation state, according to an further exemplary embodiment of the invention.

Figure 5 refers to Figure 3. The difference is that Figure 5 shows a second compensation embodiment according to the invention, in order to receive again a wanted, faultless operation state.

In Figure 5 in the electrical path A the left operating five sub modules 400 (not shown in Figure 5) each now contributes a higher voltage drop Uai to the electrical path A, such as to compensate the voltage drop loss occurring from the defective sub module. Therein, adjusting 30 at least one reference waveform comprises adjusting the reference waveform assigned to the first electrical path 110, A. Therefore, the phase voltages Ua, Ub and Uc are again all the same. It is Ua = Ub = Uc. And therefore, the line-to-line voltages Uab, Uac and Ubc are balanced again, as Uab = Uac = Ucb. The phase different is still a 120° phase different to each other.

Figure 6 shows a schematically drawing of the phase voltages of a voltage source converter device, if a sub module in the electrical path B fails, in a compensated operation state, according to an further exemplary embodiment of the invention.

In Figure 6 a third embodiment of the invention is shown. Energy is taken from the negative path of the sinusoid waves corresponding to the electrical paths A and C and used to compensate the energy loss in the energy wave of the electrical path B. Therein, adjusting the reference waveform comprises taking energy from the reference waveform assigned to the second electrical path 210, A and from the reference waveform assigned to the third electrical path 310, C, and reconstructing the reference waveform assigned to the first electrical path 110, B with the taken energy. Again the line-to-line voltages Uab, Uac and Ucb are balanced again, but at a cost of a small loss of total energy in the system.

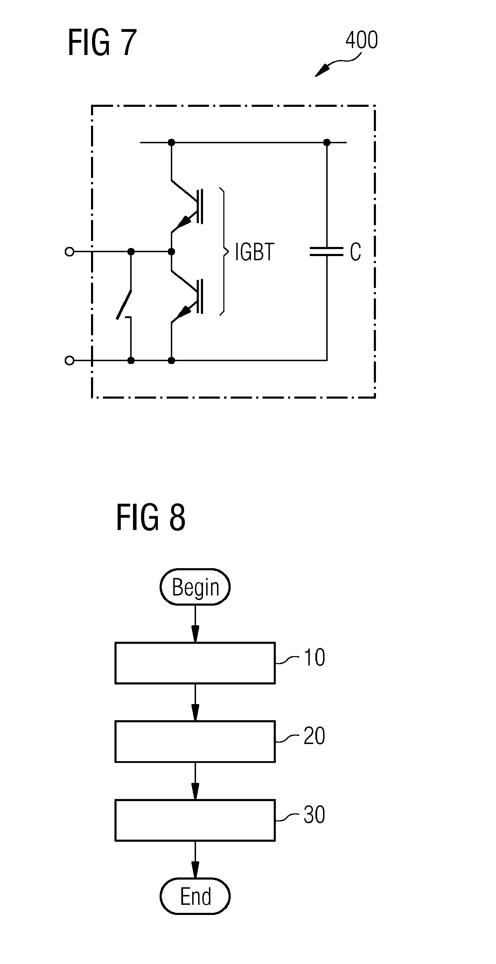

Figure 7 shows a schematically drawing of a sub module of a voltage source converter device, according to an exemplary embodiment of the invention.

In Figure 7 a sub module 400 comprises two IGBTs, a capacitor and a switch, which may act as a bypass circuit, if one of the IGBTs is damaged.

Figure 8 shows a schematically drawing of a compensation method for a voltage source converter device, according to an exemplary embodiment of the invention.

In Figure 8 is shown a method for operating a voltage source converter comprising a modular multilevel converter topology with three electrical output lines 100, 200, 300, each assigned to a different electrical path 110, 210, 310, the method comprising: Identifying 10 at least one sub module 400 of the modular multilevel converter topology as to be defective, wherein the at least one defective sub module 410 is assigned to a first electrical path 110; bypassing 20 the at least one defective sub module 410; and adjusting 30 at least one reference waveform for an electrical quantity of at least one of the three electrical paths 110, 210, 310, for compensating at least partially an influence of the at least one defective sub module 410 on an output signal provided by at least one of the three electrical output lines 100, 200, 300.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for operating a voltage source converter comprising a modular multilevel converter topology with three electrical output lines (100, 200, 300), each assigned to a different electrical path (110, 210, 310), the method comprising:
- Identifying (10) at least one sub module (400) of the modular multilevel converter topology as to be defective, wherein the at least one defective sub module (410) is assigned to a first electrical path (110),
- bypassing (20) the at least one defective sub module (410), and
- adjusting (30) at least one reference waveform for an electrical quantity of at least one of the three electrical paths (110, 210, 310), for compensating at least partially an influence of the at least one defective sub module (410) on an output signal provided by at least one of the three electrical output lines (100, 200, 300).

2. The method as of claim 1, wherein
the electrical quantity is a voltage.

3. The method as of claim 1 or 2, wherein
the at least one reference waveform is adjusted in such a manner that
- all line-to-line voltages of the three electrical output lines (100, 200, 300) are equalized.

4. The method as of any of claims 1 to 3, wherein adjusting (30) at least one reference waveform comprises
- adjusting at least one voltage of at least one operating sub module (400) in at least one electrical path (110, 210, 310).

5. The method as of claim 4, wherein
adjusting the at least one voltage comprises
- adjusting the magnitude of the at least one voltage.

6. The method as of any of claims 1 to 5, wherein
adjusting (30) at least one reference waveform comprises
- adjusting the reference waveform assigned to the first electrical path (110).

7. The method as of claim 6, wherein
adjusting the reference waveform comprises
- increasing the voltage of at least one operating sub module (400) assigned to the first electrical path (110).

8. The method as of claim 6, wherein
adjusting the reference waveform comprises
- increasing each voltage of each operating sub module (400) assigned to the first electrical path (110) by a same first amount.

9. The method as of claim 6, wherein
adjusting the reference waveform comprises
- taking energy from the reference waveform assigned to the second electrical path (210) and from the reference waveform assigned to the third electrical path (310), and
- reconstructing the reference waveform assigned to the first electrical path (110) with the taken energy.

10. The method as of any of claims 1 to 5, wherein
adjusting (30) at least one reference waveform comprises
- adjusting the reference waveform assigned to the second electrical path (210), and
- adjusting the reference waveform assigned to the third electrical path (310).

11. The method as of claim 10, wherein
adjusting the reference waveform comprises
- increasing the voltage of at least one operating sub module (400) assigned to the second path (210), and
- increasing the voltage of at least one operating sub module (400) assigned to the third path (310).

12. The method as of claim 11, wherein
adjusting the reference waveform comprises
- increasing each voltage of each operating sub module (400) assigned to the second path (210) by a same second amount, and
- increasing each voltage of each operating sub module (400) assigned to the third path (310) by a same third amount.

13. The method as of claim 12, wherein
the second amount equals to the third amount.

14. A voltage source converter device with a modular multilevel converter topology, the voltage source converter device comprising:
- three electrical output lines (100, 200, 300),
- one electrical path (110, 210, 310) for each electrical output line (100, 200, 300),
- at least two sub modules (400) for each electrical path (110, 210, 310), and
- a controller, for controlling the operation of the voltage source converter device,
wherein
the controller is adapted for executing any of the methods of claims 1 to 12.

15. The voltage source converter device as of claim 14,
wherein
controlling of the operation of the voltage source converter device comprises
- continuing an operation of the voltage source converter device after execution of the respective method.

16. The voltage source converter device as of claim 14 or 15, wherein
controlling of the operation of the voltage source converter device comprises
- providing a transient period starting with an end of the execution of the respective method and ending with the continuing of the operation.
